# EUROPEAN PATENT APPLICATION

(11) **EP 4 693 580 A1**
(43) Date of publication of application: **11.02.2026**
(21) Application number: 23930930.5
(22) Date of filing: 18.12.2023
(51) Int. Cl.: H01M 10/0585, H01M 10/052, H01M 10/0562

(54) **METHOD FOR MANUFACTURING ALL-SOLID-STATE BATTERY**

(30) Priority: 30.03.2023 JP 2023056376
(71) Applicant: AESC Japan Ltd., Yokohama-Shi, Kanagawa 220-0012 (JP)
(72) Inventor: KATAYAMA, Noboru, Zama-shi, Kanagawa 252-0012 (JP)
(74) Representative: Becker, Eberhard
(86) International application number: PCT/JP2023/045250
(87) International publication number: WO 2024/202311

(57) **Abstract**

The purpose of the present invention is to provide a method for manufacturing an all-solid-state battery with which warping of an electrode multilayer body is prevented, and deterioration of characteristics does not occur. The present invention provides a method for manufacturing an all-solid-state battery, the method comprising: a step for forming an electrode multilayer body by stacking a negative electrode, a positive electrode and a solid electrolyte membrane; a step for exposing the electrode multilayer body to an environment having a dew point temperature of - 40°C and a moisture concentration of 127 ppm or less for 20 minutes or more; and a step for press molding the electrode multilayer body.

## Description

### Technical Field

The present invention relates to a method for manufacturing an all-solid-state electrolyte. The all-solid-state battery of the present invention includes a lithium ion secondary battery, etc.

### Background Technology

In recent years, development of secondary batteries capable of repeated charge-discharge as automobile and household energy sources has been proceeding due to environmental considerations. While it is anticipated to develop secondary batteries that can be expected to have high capacity and high output, it is necessary to place even greater emphasis on safety at the same time.

In lithium ion secondary batteries, as one of the representative secondary batteries, solid batteries using solid electrolytes are known. An all-solid-state battery, which is one type of solid battery, includes a solid electrolyte layer, a positive electrode layer formed on one surface of the solid electrolyte layer and a negative electrode layer formed on the other surface, and a positive electrode plate connected to the positive electrode layer and a negative electrode plate connected to the negative electrode layer.

The positive electrode layer can be obtained by coating a slurry containing positive electrode active material particles, a binder, a solid electrolyte, and a solvent on a positive electrode current collector, and drying. An aluminum foil or the like can be used as the positive electrode current collector. On the other hand, the negative electrode can be obtained by coating a slurry containing negative electrode active material particles, a binder, a solid electrolyte, and a solvent on a negative electrode current collector, and drying. A copper foil can be used as the negative electrode current collector. Alternatively, a stainless steel foil having a lithium metal layer formed thereon can also be used as the negative electrode. The positive electrode layer and the negative electrode layer can further include a conductive additive.

The solid electrolyte layer can be formed by dispersing solid electrolyte powder in a solvent to form a slurry, applying, and drying. For example, the solid electrolyte layer can be formed directly on the surface of the negative electrode layer or positive electrode layer. The solid electrolyte layer can also be obtained by forming a solid electrolyte layer on the surface of a substrate such as a polyethylene terephthalate (PET) film, and peeling off the PET film.

An electrode laminate is obtained by pressurizing the obtained positive electrode and negative electrode in a state where the positive electrode and the negative electrode are laminated with the solid electrolyte sandwiched therebetween. A positive electrode terminal and a negative electrode terminal are attached to this electrode laminate, and are housed and sealed in an exterior container, with one end of each of these terminals drawn out to the outside, thereby obtaining an all-solid-state battery.

Sulfide solid electrolyte is known as a solid electrolyte. Sulfide solid electrolyte is chemically unstable, and is known to have ionic conductivity that decreases due to moisture during atmospheric exposure or the like. Therefore, in the case of using a sulfide solid electrolyte, the positive electrode or negative electrode active material and the solid electrolyte material itself are also sufficiently dried in advance, and the dew point is strictly controlled even during the lamination process of the positive electrode, negative electrode, and solid electrolyte layer, so that the assembly is rapidly performed under low moisture concentration.

Patent Document 1 discloses performing drying under an atmosphere having a volatile organic compound concentration of 100 ppm or less in a slurry drying process for forming an electrode layer of an all-solid-state battery. Patent Document 2 discloses heating and drying a lithium ion conductive solid electrolyte in a temperature range of 80°C to 140°C.

### Related Art Documents

### Patent Documents

Patent Document 1: Japanese Patent Application Laid-Open No. 2019-200890
Patent Document 2: Japanese Patent Application Laid-Open No. 2008-103145

### SUMMARY OF INVENTION

### Problems to be Solved by the Invention

It is difficult to completely block exposure to moisture even in the case of assembling an all-solid-state battery under dew point control. Therefore, it is considered desirable to complete the process up to the step of sealing the electrode laminate with an exterior container in as short a time as possible. However, the characteristics of the all-solid-state battery may sometimes deteriorate no matter how short the time is for assembling the all-solid-state battery.

As a result of intensive studies carried out by the inventors, it was found that an all-solid-state battery with stable battery characteristics and durability characteristics cannot be obtained unless the manufacturing processes of the electrode laminate including a positive electrode, a solid electrolyte membrane, and a negative electrode is further devised. Specifically, there has been a problem that the electrodes and solid electrolyte membrane may warp due to the process of pressing the electrodes including the positive electrode and negative electrode and the solid electrolyte membrane at high pressure. In order to prevent exposure of the solid electrolyte to moisture, simply assembling the electrode laminate in a short time cannot solve the problem of warpage of the electrode laminate.

### Means for Solving the Problems

The present invention is a method for manufacturing an all-solid-state battery, including:
a step of laminating a negative electrode, a positive electrode, and a solid electrolyte membrane to form an electrode laminate;
a step of exposing the electrode laminate to an environment having a dew point temperature of -40°C and a moisture concentration of 127 ppm or less for 20 minutes or more; and
a step of press molding the electrode laminate.

### Effects of the Invention

According to the manufacturing method of the present invention, a high-quality all-solid-state battery can be obtained, in which the solid electrolyte does not cause a decrease in ionic conductivity due to the influence of moisture, and deterioration of electrical characteristics and durability due to warpage of the electrode laminate is also suppressed.

### BRIEF DESCRIPTION OF THE DRAWINGS

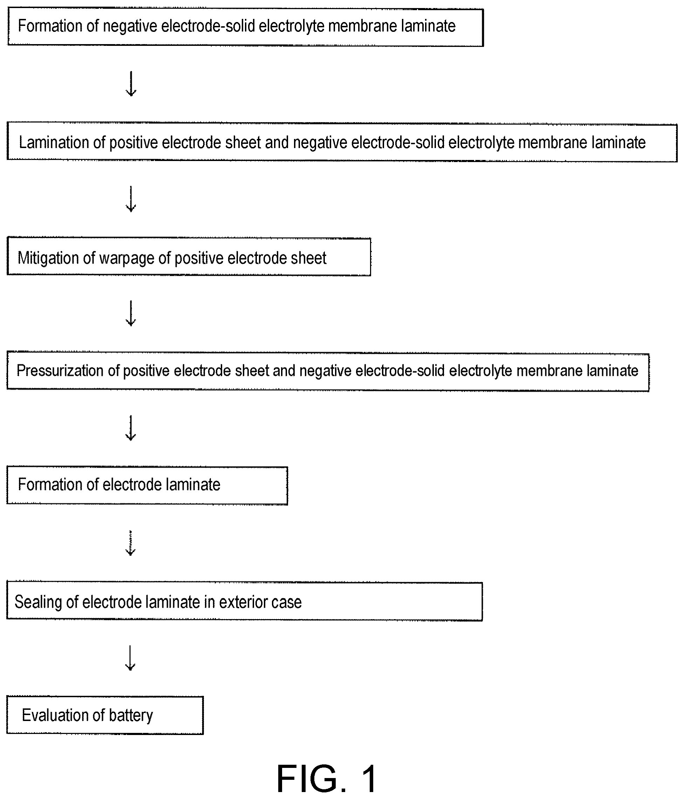

[FIG. 1] is a flow diagram showing an outline of an assembly process of an all-solid-state battery.

### DESCRIPTION OF THE EMBODIMENTS

Embodiments of the present invention will be described below with appropriate reference to the drawing. It should be noted that the present invention is not limited to the embodiments described below, and can be implemented within the scope of the gist of the present invention. The following is illustrative and is not intended to limit the present invention in any way.

### <All-solid-state Battery>

In this specification, an all-solid-state battery refers to a battery in which the electrolyte is composed of a solid electrolyte described later. In addition, in this specification, the term "all-solid-state battery" includes secondary batteries and primary batteries.

### <Negative Electrode>

The negative electrode can be a negative electrode used in a non-aqueous secondary battery material, and is not particularly limited. For example, the negative electrode includes a negative electrode current collector such as copper foil, and a negative electrode layer including a negative electrode active material and a solid electrolyte. The negative electrode layer preferably includes a binder. A negative electrode current collector made of stainless steel may be used instead of the negative electrode current collector such as copper foil, and a negative electrode in which a lithium metal layer is formed on the surface of the negative electrode current collector by rolling or the like may be used instead of the negative electrode active material. The negative electrode layer including the negative electrode active material, the solid electrolyte, and the binder can be formed on at least one surface of the negative electrode current collector.

In the case of using the negative electrode active material for the negative electrode, it is preferable to use a carbon-based active material. Natural graphite, artificial graphite, hard carbon, soft carbon, carbon black, or any mixture thereof can be selected as the carbon-based active material. Natural graphite includes natural graphite having amorphous carbon coated on the particle surface, and similarly artificial graphite includes artificial graphite having amorphous carbon coated on the particle surface. For these natural graphite and artificial graphite, primary particles, particles obtained by aggregating primary particles to form secondary particles, and mixtures thereof can be used. Also, the negative electrode active material may be a mixture of a carbon-based active material and a silicon-based active material. The negative electrode active material may include metal materials such as aluminum, silver, bismuth, calcium, cerium, indium, magnesium, tin, zinc, and nickel.

As the binder used in the negative electrode layer, examples include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene butadiene rubber (SBR), butadiene rubber (BR), chloroprene rubber (CR), isoprene rubber (IR), and acrylonitrile butadiene rubber (NBR), or polysaccharides such as carboxymethyl cellulose (CMC), xanthan gum, guar gum, and pectin. In addition, as the binder, polyacrylic acid, polymethacrylic acid, sodium polyacrylate, potassium polyacrylate, sodium polymethacrylate, potassium polymethacrylate, ethyl polyacrylate, ethyl polyacrylate, butyl polyacrylate, methyl polymethacrylate, ethyl polymethacrylate, butyl polymethacrylate, and any mixture thereof may be used. The content of the binder is preferably 1 mass% or more and less than 10 mass% with respect to the total solid content of the negative electrode layer. In the case of the content of the binder being too much, the portion where the negative electrode active material surface is covered by the binder increases, so there is a possibility that ionic conductivity and electronic conductivity may decrease. Additionally, in the case of the content of the binder being too little, there is a possibility that electrical contact between negative electrode active material particles may not be appropriately performed.

In addition to the above compounds, the components of the binder can further include carboxymethyl cellulose (referred to as "CMC"), which is a derivative of cellulose, or a metal salt of carboxymethyl cellulose (for example, sodium carboxymethyl cellulose, potassium carboxymethyl cellulose). In the case of further adding CMC or a metal salt of CMC as a binder component, the content of the CMC or CMC metal salt is preferably 0.05 mass% or more and 1.5 mass% or less with respect to the total solid content of the negative electrode layer.

The negative electrode layer may further include a conductive additive. The conductive additive is a material for reducing the resistance of the electrode. Examples of the conductive additive include carbon black such as acetylene black and Ketjen black, activated carbon, graphite, mesoporous carbon, fullerenes, carbon fibers such as carbon nanotube, carbon nanofiber, and carbon nanobrush, etc.

In the case of using carbon nanotube and carbon nanofiber as the conductive additives, the content of these conductive additives is 0.01 mass% or more and 3 mass% or less, and preferably 0.03 mass% or more and 1 mass% or less, with respect to the total solid content of the negative electrode layer.

In addition to the materials described above, electrode additives generally used for electrode formation, such as thickeners, dispersants, and stabilizers, can be appropriately used in the negative electrode layer.

### <Solid Electrolyte Membrane>

The negative electrode, solid electrolyte membrane, and positive electrode used in the manufacturing method of the embodiment include a solid electrolyte. The solid electrolyte used here can be exemplified by an oxide-based solid electrolyte and a sulfide-based solid electrolyte. The oxide-based solid electrolyte can, for example, be oxide-based materials of garnet type, NASICON type, or perovskite type. All known sulfide-based substances can be used as the sulfide-based solid electrolyte, for example, LiPO₄-Li₂S-SiS, 75%Li₂S-25%P₂S₅ mixture, Li₂S-SiS₂, Li₂S-P₂S₅, Li₃PS₄, Li₃PO₄-Li₂S-Si₂S, Li₃PO₄-Li₂S-SiS₂, LiI-Li₂S-B₂S₃, LiI-Li₂S-SiS₂, LiI-Li₂S-P₂S₅, LiI-Li₂S-P₂O₅, LiI-Li₃PO₄-P₂S₅Li₂S-P₂S₅-LiCl, Li₆PSsCl, Li₁₀GeP₂S₁₂, Li_{3.25}Ge_{0.25}P_{0.75}S₄, etc. In the embodiment, it is preferable to use a sulfide-based solid electrolyte.

The solid electrolyte membrane used in the embodiment refers to a plane with a thin shape having a predetermined area and composed of a solid electrolyte. The solid electrolyte membrane may be a single layer (a solid electrolyte membrane composed of one type of solid electrolyte) or multiple layers (a solid electrolyte membrane in which two or more types of solid electrolyte membranes are laminated).

In the present invention, it is preferable to form the solid electrolyte membrane with a membrane thickness of 15 µm to 150 µm. If the membrane thickness is smaller than this range, short circuit is more likely to occur in the case of press molding the solid electrolyte at high pressure. On the other hand, if the membrane thickness is larger than this range, it leads to excessive increase in cell volume, and the energy density per unit volume of the all-solid-state battery does not increase.

### <Positive Electrode>

The positive electrode can be a positive electrode used in a non-aqueous secondary battery material, and is not particularly limited. For example, the positive electrode includes a positive electrode current collector, and a positive electrode layer including a positive electrode active material and a solid electrolyte. The positive electrode layer preferably includes a binder. The positive electrode layer including the positive electrode active material, the solid electrolyte, and the binder can be formed on at least one surface of the positive electrode current collector.

As the positive electrode current collector, stainless steel, aluminum, nickel, titanium, and a positive electrode current collector surface-treated with carbon, nickel, titanium, or silver on the surface of aluminum or stainless steel can be used.

The positive electrode active material preferably includes a lithium nickel-based composite oxide as the positive electrode active material. The lithium nickel-based composite oxide is a transition metal composite oxide containing lithium and nickel represented by the general formula LiₓNi_{y}Me_{(1-y)}O₂ (where Me is at least one metal selected from the group consisting of Al, Mn, Na, Fe, Co, Cr, Cu, Zn, Ca, K, Mg, and Pb). The positive electrode active material can also include a lithium manganese-based composite oxide. Examples of the lithium manganese-based composite oxide include lithium manganate (LiMnO₂) having a zigzag layered structure, spinel-type lithium manganate (LiMn₂O₄), etc. In addition, the positive electrode active material preferably includes, in particular, a lithium nickel manganese cobalt composite oxide having a layered crystal structure represented by the general formula LiₓNi_{y}Co_{z}Mn_{(1-y-z)}O₂. Here, x in the general formula is 1 ≦x≦1.2, y and z are positive numbers satisfying y+z<1, and the value of y is 0.5 or more. To obtain a high-capacity battery, it is particularly preferable that y>1-y-z, and y>z. The lithium nickel-based composite oxide having this general formula is a lithium-nickel-cobalt-manganese composite oxide. The lithium-nickel-cobalt-manganese composite oxide is a lithium nickel-based composite oxide suitably used for achieving high capacity of batteries. The positive electrode active material may also include the general formula LiMPO₄ (M is at least one selected from the group of Mn, Fe, Co, and Ni). The surface of the positive electrode layer may be coated with a substance such as LiNbO₃ to form a buffer layer. The buffer layer can suppress interface resistance between the positive electrode layer and the solid electrolyte membrane by forming the buffer layer forming substance to 10 nm or less. The buffer layer can be formed on the surface of the positive electrode layer by a sol-gel method or the like.

As the binder that forms the positive electrode layer together with the positive electrode active material, examples include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene butadiene rubber (SBR), butadiene rubber (BR), chloroprene rubber (CR), isoprene rubber (IR), and acrylonitrile butadiene rubber (NBR), or polysaccharides such as carboxymethyl cellulose (CMC), xanthan gum, guar gum, and pectin.

Further, the positive electrode layer may include a conductive additive. Examples of the conductive additive include carbon black such as acetylene black and Ketjen black, activated carbon, graphite, mesoporous carbon, fullerenes, carbon fibers such as carbon nanofiber, carbon nanotube, and carbon nanobrush, etc. In addition, electrode additives generally used for electrode formation, such as thickeners, dispersants, and stabilizers, can be appropriately used in the positive electrode layer.

### <Formation of Cell>

First, the fabrication of the negative electrode will be described. There are several methods for fabricating the negative electrode, but regardless of which method is used to fabricate the negative electrode, it is preferable to fabricate under dew point control in a low moisture environment in order to suppress moisture adsorption to the solid electrolyte.

### <Fabrication of Negative Electrode>

In the case of using a negative electrode with a negative electrode active material formed on the negative electrode current collector, a slurry in which a negative electrode active material, a solid electrolyte, and a binder are dispersed in a dehydration-treated organic solvent is applied to part or all of the surface of a negative electrode current collector such as copper foil, and dried to obtain a negative electrode precursor sheet. The obtained negative electrode precursor sheet can be compressed by a press molding method such as roll press, uniaxial press, rubber press, and isostatic press (cold isostatic pressing method [CIP], warm isostatic pressing method [WIP], with cold isostatic pressing method being particularly preferable) to obtain a negative electrode sheet. Examples of the organic solvent include acetonitrile, xylene, dimethoxyethane, dimethyl carbonate, tertiary amine solvents such as triethylamine, heptane, hexane, tetrahydrofuran, toluene, N-methylpyrrolidone, as well as ether solvents, thiol solvents, and butyl butyrate, all of which are preferably dehydration-treated.

Alternatively, a negative electrode precursor sheet can be obtained by transferring granulated bodies of a negative electrode active material including at least the negative electrode active material, the solid electrolyte, and the binder to a negative electrode current collector. At this time, a surface layer including a polymer component such as a binder that enhances adhesion with the granulated bodies of the negative electrode active material may be formed in advance on the surface of the negative electrode current collector. The negative electrode layer may also include a conductive additive. The obtained negative electrode precursor sheet can be compressed by a press molding method such as roll press, uniaxial press, rubber press, and isostatic press (CIP, WIP) to obtain a negative electrode sheet.

Alternatively, a negative electrode sheet can be obtained by placing a metallic lithium layer such as lithium foil on part or all of a stainless steel negative electrode current collector, and bringing these into close contact by rolling treatment or the like.

### <Fabrication of Solid Electrolyte Membrane>

Next, a solid electrolyte membrane is formed on the surface of the negative electrode. Regardless of which method is used to form the solid electrolyte membrane, it is preferable to form under dew point control in a low moisture environment in order to suppress moisture adsorption to the solid electrolyte.

The solid electrolyte membrane can be formed on the surface of the negative electrode by applying and drying a slurry in which a solid electrolyte is dispersed in an organic solvent on the surface of the negative electrode layer formed on copper foil or the surface of metallic lithium formed on stainless steel foil. Examples of the organic solvent include acetonitrile, xylene, dimethoxyethane, dimethyl carbonate, tertiary amine solvents such as triethylamine, heptane, hexane, tetrahydrofuran, toluene, N-methylpyrrolidone, as well as ether solvents, thiol solvents, and butyl butyrate, all of which are preferably dehydration-treated.

Alternatively, a solid electrolyte membrane can also be formed on the surface of the negative electrode by applying and drying a slurry in which a solid electrolyte is dispersed in an organic solvent on the surface of a polyester film including polyester as the main component to form a solid electrolyte membrane, and then laminating the polyester film together to bring the solid electrolyte membrane into contact with the surface of the negative electrode layer or the surface of metallic lithium.

A negative electrode-solid electrolyte membrane laminate is obtained by compressing the laminated negative electrode and solid electrolyte membrane by a press molding method such as roll press, uniaxial press, rubber press, and isostatic press (CIP, WIP). In the case of laminating and pressurizing the solid electrolyte together with a polyester sheet, the polyester film is peeled off from the solid electrolyte membrane. At this time, it is also preferable to use a polyester film whose surface is coated with a release agent such as silicone so that the polyester film can be easily peeled off from the solid electrolyte membrane.

### <Fabrication of Positive Electrode>

Next, the fabrication of the positive electrode will be described. Regardless of which method is used to fabricate the positive electrode, it is preferable to fabricate under dew point control in a low moisture environment in order to suppress moisture adsorption.

A positive electrode sheet is obtained by applying and drying a slurry in which a positive electrode active material, a solid electrolyte, and a binder are dispersed in a dehydration-treated organic solvent on part or all of the surface of a positive electrode current collector such as aluminum. Examples of the organic solvent include acetonitrile, xylene, dimethoxyethane, dimethyl carbonate, tertiary amine solvents such as triethylamine, heptane, hexane, tetrahydrofuran, toluene, N-methylpyrrolidone, as well as ether solvents, thiol solvents, and butyl butyrate, all of which are preferably dehydration-treated.

### <Formation of Electrode Laminate>

The positive electrode sheet is laminated on the negative electrode-solid electrolyte membrane laminate to obtain an electrode laminate precursor. In the case of using a sulfide solid electrolyte as the solid electrolyte, the ionic conductivity of the solid electrolyte decreases due to exposure to moisture. Therefore, after obtaining the electrode laminate precursor, it is desirable to compress the electrode laminate precursor within a predetermined time by a method such as roll press, uniaxial press, rubber press, and isostatic press (CIP, WIP), to obtain an electrode laminate. The predetermined time is, for example, within 2 days in an environment with a dew point of - 40°C and a moisture concentration of 127 ppm or less. In the case where this time elapses, there is a risk of performance deterioration due to water absorption of the solid electrolyte, which is also undesirable from the viewpoint of reduced productivity of all-solid-state batteries.

The positive electrode can be first roll-pressed in the state of a thin sheet formed by simply forming a positive electrode layer on a positive electrode current collector, and then laminated on the negative electrode-solid electrolyte membrane laminate. Alternatively, from the viewpoint of production efficiency, the positive electrode sheet can be placed on the negative electrode-solid electrolyte membrane laminate without pressurizing the positive electrode sheet alone, or by applying only the pressure to the extent that the positive electrode sheet is pressed down by the transport arm of the laminating machine. This process becomes the process immediately before performing the isostatic press for forming the electrode laminate.

In the case of roll pressing the positive electrode sheet, voids present in the positive electrode active material and the solid electrolyte are once crushed, but the positive electrode is distorted due to spring back caused by the release of the pressure applied to the molded body. Since the positive electrode is extremely thin, the positive electrode tends to warp immediately after pressing. However, in the case of placing the positive electrode sheet on the negative electrode-solid electrolyte membrane laminate in such a state and immediately performing isostatic press, the influence of spring back appears significantly after forming the electrode laminate, which may affect battery characteristics such as causing fine peeling at the interface between the positive electrode sheet and the solid electrolyte membrane.

On the other hand, in the case of laminating the positive electrode sheet to the negative electrode-solid electrolyte membrane laminate without substantially applying pressure to the positive electrode sheet, and then attempting isostatic press, the positive electrode sheet tends to warp due to the influence of gas present in the voids in the positive electrode layer at the time of vacuum sealing this laminate in the pretreatment during isostatic press. In this case, the influence of warpage of the positive electrode may also affect the electrode laminate, and the electrode laminate and battery characteristics.

Therefore, it is preferable to allow a predetermined time or more between laminating the positive electrode sheet and the negative electrode-solid electrolyte membrane laminate and performing press molding. In this way, the influence of warpage of the positive electrode can be mitigated to reduce strain, etc. after isostatic press. The predetermined time is, for example, 20 minutes or more in an environment having a dew point of -40°C and a moisture concentration of 127 ppm or less. This can mitigate the warpage of the electrode laminate to a degree that does not cause influence of press molding. In the case of laminating multiple negative electrodes, solid electrolyte membranes, and positive electrodes, it is preferable to perform press molding after a predetermined time has elapsed from finally laminating the positive electrode sheet and the negative electrode-solid electrolyte membrane laminate.

### <Sealing of Electrode Laminate>

It is desirable to promptly seal the obtained electrode laminate in an exterior case. After attaching one end of a rectangular metal plate serving as the negative electrode terminal to the negative electrode current collector and attaching one end of a rectangular metal terminal serving as the positive electrode terminal to the positive electrode current collector, the electrode laminate is housed in an exterior case made of aluminum. It is preferable that a resin layer such as polyolefin is formed on at least the surface facing the electrode laminate among the inner surfaces of the exterior case. The electrode laminate is sealed with the aluminum exterior case by heating the resin layer to melt the resin, and solidifying the resin again. At this time, the other end of the positive electrode terminal and the other end of the negative electrode terminal are arranged to be drawn out of the exterior case. A layer of resin that is the same as or different from the type of resin used for the resin layer on the inner surface of the exterior case can also be provided at the portions where the positive electrode terminal and the negative electrode terminal contact the resin layer on the inner surface of the exterior case, to strengthen the adhesion of the exterior case at this location.

### Examples

A battery was fabricated according to the flow shown in the embodiment of the present invention. FIG. 1 is a flow diagram summarizing the embodiment of the present invention.

### [I] Formation of Negative Electrode-Solid Electrolyte Membrane Laminate

(1) A foil (manufactured by Honjo Metal Co., Ltd.) having a 20 µm metallic lithium layer formed on the surface of a stainless steel negative electrode current collector with a thickness of 10 µm was prepared as a negative electrode.
(2) A slurry in which Li₆PS₅Cl (D50: 8 µm) as a solid electrolyte was dispersed in xylene as an organic solvent was applied to the surface of a polyester film including polyester as a main component, and dried to obtain a solid electrolyte membrane. The obtained solid electrolyte membrane was laminated together with the polyester film to be in contact with the surface of metallic lithium.
(3) The negative electrode-solid electrolyte membrane laminate of the above (2) was vacuum-sealed by lamination in a nylon vacuum pack, and held at room temperature (25°C) under a pressure of 400 MPa for 1 minute. Thereafter, while maintaining the laminate sealing, the negative electrode-solid electrolyte membrane laminate was compressed by an isostatic press method to obtain a negative electrode-solid electrolyte membrane laminate having a negative electrode layer porosity of 7%. The size of the laminate of negative electrode and solid electrolyte was 50 mm × 70 mm.
(4) The polyester film was peeled off from the solid electrolyte membrane to obtain a negative electrode-solid electrolyte membrane laminate.

### [II] Lamination of Positive Electrode Sheet and Negative Electrode-Solid Electrolyte Membrane Laminate

(1) A slurry in which 70 mass% of LiNi_{0.8}Co_{0.1}Mn_{0.1}O₂ (D50: 8 µm) as a positive electrode active material, 25 mass% of Li₆PS₅Cl (average particle diameter: 1 µm) as a solid electrolyte, 2 mass% of acetylene black (manufactured by Timcal Japan Co., Ltd.), and 3 mass% of styrenebutadiene rubber (SBR) as a binder were dispersed in xylene as an organic solvent was applied to an aluminum foil (manufactured by UACJ Corporation) having a thickness of 10 µm, and dried to form a positive electrode layer, thereby obtaining a positive electrode.
(2) The positive electrode obtained in the above (1) was cut to 45 mm × 65 mm, and laminated such that the positive electrode layer was in contact with the solid electrolyte membrane of the negative electrode-solid electrolyte membrane laminate prepared in [I], thereby obtaining an electrode laminate precursor. The number of laminated layers of the positive electrode and the negative electrode-solid electrolyte membrane laminate was one each.

### [III] Mitigation of Warpage of Positive Electrode Sheet

The electrode laminate precursor obtained in the above [II] was stored in a space where the atmosphere was controlled to a dew point temperature of -40°C and a moisture concentration of 127 ppm or less until press molding. The time from laminating the last positive electrode sheet to press molding was set to the time shown in Table 1 (Examples 1 to 3 and Comparative Examples 1 to 2).

### [IV] Pressurization of Electrode Laminate

(1) The electrode laminate precursor obtained in each example was vacuum-sealed by lamination in a nylon vacuum pack, and held at room temperature (25°C) under a pressure of 400 MPa for 1 minute. Next, while maintaining the laminate sealing, the electrode laminate precursor was compressed by an isostatic press method to obtain an electrode laminate having a positive electrode layer porosity of 5%.

### [V] Sealing in Exterior Case

(1) The electrode laminate obtained in the above [IV] was sealed in an exterior case by the method described in the embodiment to obtain a battery in which a positive electrode terminal and a negative electrode terminal were drawn out of the aluminum exterior case (manufactured by Dai Nippon Printing Co., Ltd.).

The obtained battery was subjected to constant current charging at 0.05C up to 4.25V, then switched to constant voltage charging and cut off at 0.005C. Thereafter, the discharge average operating voltage at the time of constant current discharging at 0.05C down to 2.5V was obtained. Table 1 shows the discharge average operating voltages of other examples and comparative examples in the case of setting the discharge average operating voltage of Example 1 as 1. Additionally, "wrinkles after press" in Table 1 represents the evaluation where the electrode laminate precursor was compressed by an isostatic pressing method, and then the obtained electrode laminate was visually observed, with cases showing wrinkles evaluated as "Yes" and cases showing no wrinkles evaluated as "No".

**[Table 1]**

| Table 1: Characteristics of batteries of Examples and Comparative Examples | | | |
|---|---|---|---|
| | Time from finally laminating positive electrode sheet and the negative electrode-solid electrolyte membrane laminate to performing press molding | Discharge average operating voltage in the case of setting the discharge average operating voltage of Example 1 as 1 | Wrinkles after press |
| Example 1 | 20 minutes | 1.000 | No |
| Example 2 | 8 hours or less | 0.995 | No |
| Example 3 | 2 days | 0.980 | No |
| Comparative Example 1 | 10 minutes | 1.000 | Yes |
| Comparative Example 2 | 7 days | 0.713 | No |

From Table 1, it can be said that it is preferable to allow a time of 20 minutes or more from the final lamination of the positive electrode sheet and the negative electrode-solid electrolyte membrane laminate to press molding.

The examples in the present invention are merely examples, and are not limited thereto. For example, although a laminate film made of aluminum is used for the exterior case, a rigid can case made of aluminum or a cylindrical type may also be used. Although Li₆PS₅Cl is used as the solid electrolyte, the present invention can be applied in the case of any sulfide-based solid electrolyte with low chemical stability with water. Although a positive electrode and a negative electrode adjusted to predetermined dimensions in advance are used for the positive electrode and the negative electrode, the positive electrode and the negative electrode may be quickly cut to a predetermined shape after lamination. In addition, it goes without saying that changes in design are possible within a range that does not affect the invention.

## Claims

1. A method for manufacturing an all-solid-state battery, comprising:
a step of laminating a negative electrode, a positive electrode, and a solid electrolyte membrane to form an electrode laminate;
a step of exposing the electrode laminate to an environment having a dew point temperature of -40°C and a moisture concentration of 127 ppm or less for 20 minutes or more; and
a step of press molding the electrode laminate.

2. The method for manufacturing an all-solid-state battery according to claim 1, wherein the electrode laminate is exposed to an environment having a dew point temperature of - 40°C and a moisture concentration of 127 ppm or less for 2 days or less.

3. The method for manufacturing an all-solid-state battery according to claim 1 or 2, wherein the electrode laminate is press molded by an isostatic pressing method.

4. The method for manufacturing an all-solid-state battery according to claim 3, wherein the isostatic pressing method is a cold isostatic pressing method.

5. The method for manufacturing an all-solid-state battery according to any one of claims 1 to 4, wherein the solid electrolyte is a sulfide-based solid electrolyte.
